# EUROPEAN PATENT SPECIFICATION

(11) **EP 3 030 957 B1**
(45) Date of publication and mention of the grant of the patent: **01.05.2019**
(21) Application number: 14752426.8
(22) Date of filing: 17.07.2014
(51) Int. Cl.: G06F 3/0488, G06F 1/16, G07F 7/08

(54) **MULTI-FUNCTION ELECTRONIC PDA DEVICE**
MULTIFUNKTIONELLE ELEKTRONISCHE PDA-VORRICHTUNG
DISPOSITIF PDA ÉLECTRONIQUE MULTIFONCTIONS

(30) Priority: 06.08.2013 IT PD20130226
(43) Date of publication of application: 15.06.2016
(73) Proprietor: 4P S.r.l., 35127 Padova (IT)
(72) Inventor: MANSUTTI, Silvano, I-35127 Padova (IT)
(74) Representative: Vinci, Marcello
(86) International application number: PCT/IB2014/063185
(87) International publication number: WO 2015/019218

(56) References cited:
- WO-A1-99/67701
- JP-A- 2010 277 465
- JP-A- 2012 208 767
- US-A1- 2007 220 444
- US-A1- 2013 002 565
- US-A1- 2013 137 483
- US-B1- 6 934 664

## Description

This patent relates to multifunction palmtop computers and in particular concerns a new multifunction handheld electronic device equipped with a display or a screen.

Prior art comprises palmtop computers, that is, electronic devices with dimensions and weight that make them suitable to be held with one hand and be fully portable even during operation.

These palmtop computers typically include a plurality of peripheral devices integrated in a single box-shaped body, such as the data display, keyboard for data entry, CPU, random-access and storage memory.

Prior art also comprises palmtop computers equipped with an integrated printer and one or more additional memory cards.

Depending on the intended use of the electronic device, it can also comprise further integrated accessories and peripherals. For example, the well-known electronic devices for the management of credit card and/or debit card (cashless) payments also comprise an interface for chip cards based on contact or contactless technology and a display or touch screen area to enter personal identification numbers or to sign to complete the credit card transaction.

These handheld electronic devices to manage payments typically have a single display to show the relevant data, and therefore provide for a limited use of the device itself, where the seller and the buyer must be side by side in order to simultaneously view the display, or the handheld device must be continuously rotated back and forth from the buyer's to the seller's position.

One possible solution for this drawback could be to equip the device with a second display, but this solution makes the device less compact, more prone to failures, and more structurally complex as a result of the greater number of components.

US 2007/220444 A1 relates to a fixed device, such as a table top, suited to display a first application's interface oriented in a first direction and a second interface oriented in a second direction.

JP 2010 277465 A discloses a mobile terminal apparatus for use in payment, that can use a plurality of payment application programs. The display can be divided into an upper half display area and a lower half display area, wherein the lower half display area can be rotated at 180°. Each half display area is used for display a specific payment application program, different from the payment application program displayed in the other half display area. As a consequence, said mobile terminal apparatus can be used only by a single user.

The object of this patent is a new type of multi-function handheld electronic device equipped with a display or screen.

The main object of the present invention is to make the device easier and more comfortable to use for both the main user and one or more secondary users.

Another object of the present invention is to integrate more functions into a single device including for example those of a regular computer, the management and execution of electronic payments (cashless), and the recording of transactions for tax purposes.

A further object of the present invention is to achieve a compact device by limiting the number of components.

Yet another object of the present invention is to integrate various features, including for example, detection systems for counterfeit money.

These and other objects, direct and complementary, are achieved by the new handheld multifunction electronic device of a type comprising the following components in a single box-shaped body: a display, at least one CPU, at least one random-access memory, at least one interface for data entry, and where the aforementioned display comprises at least two display areas, where at least one of these areas can be oriented differently with respect to the other main area.

This orientable area is suited to display the image according to at least one different orientation with respect to the orientation of the main area.

The new handheld electronic device is particularly suitable for use as a normal computer for the management of sales, orders, payments, electronic payments (cashless), and/or the recording of transactions for tax purposes. In this regard, the new multifunctional palmtop device conveniently also comprises at least one housing with an interface for a fiscal memory device (for example DGFE in Italy) for the secure recording of the receipts issued. For example, that interface is usefully located in the rear of the device, for example in the battery compartment that is normally accessible by the operator and has no anti-tampering tax seal or alternatively it could be located inside the anti-tapering tax seal protected body, not accessible by the operator.

The device also preferably comprises at least one integrated printer used for printing orders and/or other non-tax related documents and/or for printing receipts, wherein the printer is programmed, in a manner that cannot be changed by the user, to format receipts, that is, the size, font, the information to be printed, any possible tax logotype, while also recording the relevant data in the aforementioned fiscal memory device, and the printing of the words "NOT FOR TAX PURPOSES" when non tax relevant documents are printed.

The device also comprises at least one unalterable fiscal memory device and its housing inside an integrated housing not accessible from the outside of the device itself, this fiscal memory being permanently fixed inside the housing, and where the housing itself can only be opened after breaking the anti-tampering tax seal.

The new device includes the data display, suited for example to display an order, or a list of products selected by the customer, with their quantities and/or prices, and the total amount for confirmation by the customer.

The display of the new device, as noted, comprises at least two display areas: a main area and at least one orientable area, where the orientable area is suited to show the display according to at least one different orientation with respect to the orientation of the main area.

In the preferred embodiment, at least one orientable area can be oriented in the same way as the main area of the display, thereby enabling the use of the display in the conventional manner as a full-size display, or may be otherwise oriented, for the use of the display independent of the main area. For example the orientable area can be rotated 90°, 180°, or 270° with respect to the main area, in order to be viewed by a second user located for example in front of or to the side of the main user of the device.

The at least one orientable area can be oriented following a voluntary command from the user and/or can occur automatically as a function of the position of the device.

The new device thus includes at least one position sensor, such as an accelerometer suited to detect the variations in orientation and/or position of the device and to send signals to the device itself to correspondingly vary the orientation of the at least one orientable area.

For example, when the main user has to show part of the display to a secondary user located in front of him, he must simply place the device horizontally so that the at least one orientable area rotates 180° with respect to the main area, which remains properly oriented toward the primary user, while the at least one orientable area is correctly oriented toward the secondary user.

The at least one accelerometer may also detect the inclination of the device, consequently orienting the at least one display area so that it is properly oriented and thus readable for the user toward which the device is inclined. A practical application of the new device is to use it as a cash register to record transactions for tax purposes, where those products from a list according to the instructions of the buyer and the total amount appear in the display.

Once the purchase is confirmed the tax receipt printing process is initiated during which the list of products, partial sums and the total amount is simultaneously displayed on the screen and printed.

This list with partial sums and the total amount is then displayed in both areas of the display and in any case at least in the orientable area, for example rotated by 180° with respect to the main area.

The new device may also comprise at least one touch screen which can be separated from the data display or superimposed on all or part of the main display, for example coinciding with the orientable area so that the buyer can type in his/her PIN or signature while remaining in front of the seller using the device.

This touch screen is useful for payment procedures or other procedures that require a manual signature, with graphometric/biometric data captured from the signature itself and/or to authenticate the signature, for example, for the procedures of acceptance and verification of a document or receipt, or to enter a personal identification number PIN.

Alternatively or in combination, the new device may comprise a keyboard to enter a personal identification code (PIN).

This touch screen function of the display or portion of the display can be activated when needed or may always be activated.

The new device may also comprise one or more means of verification of banknotes, for example one or more ultraviolet and/or infrared light detectors.

Thus the new device enables the following exemplary applications: operations for door to door sales, van sales or route accounting, sales on board means of transport, such as on-board aircraft or catering on-board trains, issuing fines, management of car parks, mobile ticketing, ticket or label verification in general, meter reading, cash/valuables-in-transit (CVIT), technical support at the customer's premises, express courier services and postal and delivery services in general, warehouse logistics, healthcare, hospitality, and municipal services in general.

The characteristics of the present invention will be better clarified by the following description with reference to the drawings. It is to be noted that the scope of the present invention is defined by the appended claims. Embodiments which do not fall within the scope of the claims do not describe part of the invention.

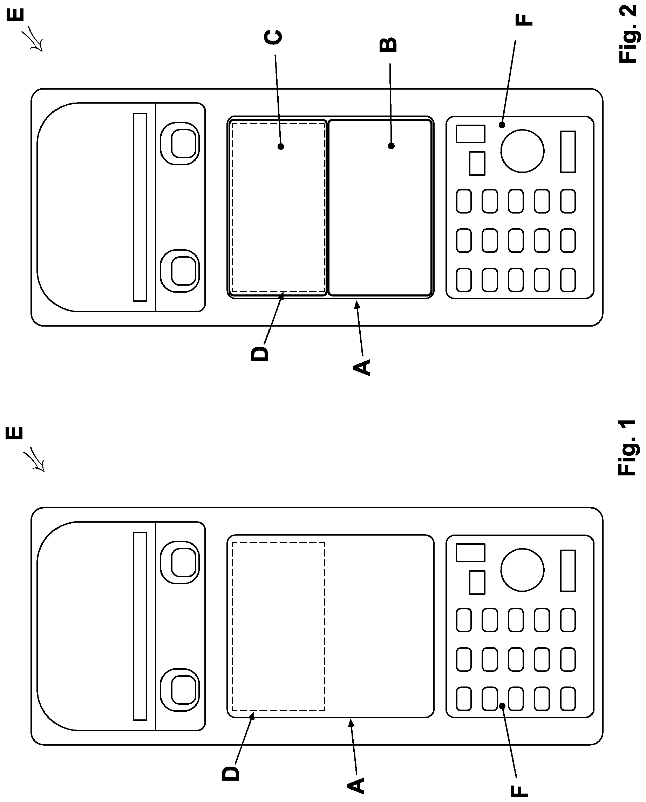

Figures 1 and 2 show the new device (E) with the display (A) respectively in the full screen display mode and differently orientable two-area mode (B, C).

It is a multifunctional electronic palmtop device (E) comprising in a single box-shaped body a display (A), at least one CPU, at least one random-access memory, and at least one interface for data entry such as a keyboard (F).

The display (A) comprises at least two portions (B, C) or data display areas, wherein at least one of the areas (C) can be variably oriented or oriented in a different way from the remaining area, or the main area (B), that orientable area (C) being suited to display an image according to at least one orientation different than the orientation of the main area (B).

For example, the at least one orientable area (C) can be oriented in the same way as the main area (B) of the display (A), for a full screen view, or may be otherwise oriented, for a view independent of the main area (B).

The new multifunctional electronic palmtop device (E) may further comprise at least one touch panel (D) superimposed on part or all of the display. Alternatively the touch screen panel (D) may only coincide with the portion of the orientable area (C).

The new device (E) also comprises at least one detector of counterfeit banknotes, for example, based on ultraviolet or infrared light, positioned for example on the back of the body.

Therefore, with reference to the preceding description and the attached drawing the following claims are made.

## Claims

1. Multifunction electronic handheld computer device (E) adapted for the management of sales, orders, payments, electronic payments (cashless), and/or the recording of transactions for tax purposes, comprising, in a single box-shaped body: a display (A), at least one CPU, at least one operation memory, at least one data input and display interface, comprising:
• said display (A), in turn comprising at least two portions (B, C) or data display areas, wherein at least one of said areas (C) has variable orientation or can be oriented differently from the other area, or main area (B), said orientable area (C) being suited to display an image according to at least one orientation different from the orientation of the main area (B),
• at least one touch panel (D) for entering data and/or making a manual signature, for capturing digital graphometric/biometric data from the signature and/or authenticating the signature and/or entering a personal identification number (PIN) or other code, wherein said touch screen (D) is completely or partially superimposed to said data display (A),
and wherein said touch panel (D) coincides with said at least one orientable area (C) of said display (A),
**characterized in that** it also comprises one or more position sensors, accelerometers or means suited to detect the variations in orientation and/or position and/or the movement of the device in the space, to correspondingly vary the orientation of the at least one orientable area (C), depending on the position of the device (E) itself.

2. Multifunction electronic handheld computer device (E) according to claim 1, wherein said at least one orientable area (C) can be oriented in the same way as the main area (B) of the display (A), for a full-screen visualization, or can be oriented differently, so that the visualization is independent of said main area (B).

3. Multifunction electronic handheld computer device (E) according to claim 2, wherein said at least one orientable area (C) can be rotated by 90°, 180° or 270° or any other selectable angle with respect to said main area (B).

4. Multifunction electronic handheld computer device (E) according to claims 1, 2, 3, wherein it also comprises at least one housing with interface for an electronic journal device (DGFE).

5. Multifunction electronic handheld computer device (E) according to claims 1, 2, 3, 4, wherein it also comprises at least one integrated printer to be used for printing fiscal and non fiscal documents.

6. Multifunction electronic handheld computer device (E) according to the preceding claim, wherein said printer is programmed, in a way that cannot be modified by the user, in order to format the receipt, meaning its size, the type of character used and the information contained therein, to add any logotype with the device identification number, to provide for simultaneous registration in the electronic journal device (DGFE) and to print the words "NON FISCAL" if other types of documents are issued.

7. Multifunction electronic handheld computer device (E) according to claims 1, 2, 3, 4, 5, 6, wherein it also comprises at least one fiscal memory with unalterable contents, and the relative housing inside an integrated casing that cannot be accessed from the outside of the device, said fiscal memory being fixed in a removable manner inside said casing, and wherein said casing can be opened only after breaking the fiscal seal.

8. Multifunction electronic handheld computer device (E) according to claims 1, 2, 3, 4, 5, 6, 7, wherein it also comprises at least one detector of counterfeit banknotes.

## Patentansprüche

1. Elektronische Handheld-Multifunktions-Computervorrichtung (E) zum Management von Verkäufen, Bestellungen, Zahlungen, elektronischen (bargeldlosen) Zahlungen und/oder zur Speicherung von Vorgängen zu steuerlichen Zwecken, in einem einzigen, kastenförmigen Körper Folgendes umfassend: ein Display (A), wenigstens eine ZVE, wenigstens einen Arbeitsspeicher, wenigstens eine Schnittstelle zur Dateneingabe und - anzeige, die Folgendes umfasst:
• das besagte Display (A), das seinerseits wenigstens zwei Abschnitte (B, C) oder Datenanzeigebereiche umfasst, wobei wenigstens einer der besagten Bereiche (C) eine variable Orientierung aufweist bzw. anders orientiert werden kann als der andere Bereich bzw. Hauptbereich (B), wobei der besagte orientierbare Bereich (C) dazu geeignet ist, ein Bild wenigstens mit einer anderen Orientierung als der Orientierung des Hauptbereichs (B) anzuzeigen,
• wenigstens ein Touch Panel (D) zur Dateneingabe und/oder manuellen Unterschrift, zur Erfassung digitaler graphometrischer/biometrischer Daten aus der Unterschrift und/oder zur Authentifizierung der Unterschrift und/oder zur Eingabe einer persönlichen Identifikationsnummer (PIN) oder eines anderen Codes, wobei der besagte Touch Panel (D) vollkommen oder teilweise dem besagten Datendisplay (A) überlagert ist,
und wobei das besagte Touch Panel (D) mit dem besagten wenigstens einen orientierbaren Bereich (C) des besagten Displays (A) zusammenfällt,
**dadurch gekennzeichnet, dass** sie außerdem einen oder mehrere Positionssensoren, Beschleunigungsmesser oder Mittel umfasst, die dazu geeignet sind, die Veränderungen der Orientierung und/oder Position und/oder Bewegung der Vorrichtung im Raum festzustellen, um die Orientierung des besagten wenigstens einen orientierbaren Bereich (C) der Position der Vorrichtung (E) selbst entsprechend zu ändern.

2. Elektronische Handheld-Multifunktions-Computervorrichtung (E) nach Patentanspruch 1, wobei der besagte wenigstens eine orientierbare Bereich (C) für eine Vollbildanzeige in gleicher Weise orientiert werden kann wie der Hauptbereich (B) des Displays (A), oder anders orientiert werden kann, so dass die Anzeige unabhängig von dem besagten Hauptbereich (B) ist.

3. Elektronische Handheld-Multifunktions-Computervorrichtung (E) nach Patentanspruch 2, wobei der besagte wenigstens eine orientierbare Bereich (C) um 90°, 180° oder 270° oder um jeglichen anderen, einstellbaren Winkel bezüglich des besagten Hauptbereichs (B) gedreht werden kann.

4. Elektronische Handheld-Multifunktions-Computervorrichtung (E) nach den Patentansprüchen 1, 2, 3, wobei sie des Weiteren wenigstens ein Gehäuse mit Schnittstelle für eine elektronische Journalvorrichtung (DGFE) umfasst.

5. Elektronische Handheld-Multifunktions-Computervorrichtung (E) nach den Patentansprüchen 1, 2, 3, 4, wobei sie außerdem wenigstens einen integrierten Drucker zum Drucken fiskalischer und nicht fiskalischer Dokumente umfasst.

6. Elektronische Handheld-Multifunktions-Computervorrichtung (E) nach vorstehendem Patentanspruch, wobei der besagte Drucker in einer durch den Benutzer nicht veränderbaren Weise zur Formatierung der Quittung hinsichtlich der Größe, der verwendeten Schrift und der enthaltenen Informationen programmiert ist, bzw. um jegliche Logotype mit der Identifikationsnummer der Vorrichtung hinzuzufügen, um eine gleichzeitige Registrierung in der elektronischen Journalvorrichtung (DGFE) vorzunehmen und um die Kennzeichnung "NICHT FISKALISCH" zu drucken, wenn Dokumente anderer Art ausgestellt werden.

7. Elektronische Handheld-Multifunktions-Computervorrichtung (E) nach den Patentansprüchen 1, 2, 3, 4, 5, 6, wobei diese außerdem wenigstens einen fiskalischen Speicher mit nicht veränderbarem Inhalt umfasst sowie die entsprechende Aufnahme innerhalb eines integrierten Gehäuses, das vom Äußeren der Vorrichtung nicht zugänglich ist, wobei der besagte fiskalische Speicher abnehmbar in dem besagten Gehäuse fixiert ist und wobei das besagte Gehäuse nur nach Erbrechen des fiskalischen Siegels geöffnet werden kann.

8. Elektronische Handheld-Multifunktions-Computervorrichtung (E) nach den Patentansprüchen 1, 2, 3, 4, 5, 6, 7, wobei diese außerdem wenigstens einen Detektor falscher Banknoten umfasst.

## Revendications

1. Ordinateur de poche électronique multifonction (E), apte à gérer les ventes, les commandes, les paiements, les paiements électroniques (paiement sans espèces), et/ou l'enregistrement de transactions à des fins fiscales, comprenant dans un corps en forme de boîtier unique : un afficheur (A), au moins un CPU, au moins une mémoire de travail, au moins une interface de saisie et d'affichage de données, comprenant :
• ledit afficheur (A), comprenant à son tour au moins deux portions (B, C) ou des zones d'affichage des données, où au moins une desdites zones (C) présente une orientation variable ou peut être orientée de manière différente par rapport à l'autre zone, ou zone principale (B), ladite zone orientable (C) étant indiquée pour afficher une image selon au moins une orientation différente par rapport à l'orientation de la zone principale (B),
• au moins un écran tactile (D) pour la saisie de données et/ou pour effectuer une signature manuelle, pour le captage digital des données graphométriques/biométriques de la signature et/ou pour l'authentification de la signature et/ou pour l'introduction d'un numéro d'identification personnelle (PIN) ou autre code, où ledit écran tactile (D) est complètement ou partiellement superposé audit afficheur de données (A),
et où ledit écran tactile (D) coïncide avec ladite au moins une zone orientable (C) dudit écran (A),
**caractérisé en ce qu'**il comprend également un ou plusieurs capteurs de position, accéléromètres ou moyens indiqués pour détecter les variations d'orientation et/ou de position et/ou de mouvement du dispositif dans l'espace, pour varier proportionnellement l'orientation de ladite au moins une zone orientable (C), en fonction de la position du dispositif (E).

2. Ordinateur de poche électronique multifonction (E) selon la revendication 1, où ladite au moins une zone orientable (C) peut être orientée de la même façon de la zone principale (B) de l'afficheur (A), pour un affichage plein écran, ou peut être orientée de manière différente, de façon à ce que l'affichage soit indépendant de ladite zone principale (B).

3. Ordinateur de poche électronique multifonction (E) selon la revendication 2, où ladite au moins une zone orientable (C) peut être tournée de 90°, 180° ou 270° ou d'un angle sélectionnable par rapport à ladite zone principale (B).

4. Ordinateur de poche électronique multifonction (E) selon les revendications 1, 2, 3, où il comprend également au moins un logement avec interface pour un dispositif journal de fond électronique (DGFE).

5. Ordinateur de poche électronique multifonction (E) selon les revendications 1, 2, 3, 4, où il comprend également au moins une imprimante intégrée à utiliser pour l'impression de documents fiscaux et non fiscaux.

6. Ordinateur de poche électronique multifonction (E) selon la revendication précédente, où ladite imprimante est programmée, d'une manière non modifiable par l'utilisateur, pour formater le reçu, c'est-à-dire ses dimensions, le type de caractère utilisé et les informations contenues dans celui-ci, pour ajouter tout logo avec le numéro d'identification du dispositif, pour fournir l'enregistrement simultané dans le dispositif de journal électronique (DGFE) et pour imprimer les termes "NON FISCAL" si d'autres types de document sont émis.

7. Ordinateur de poche électronique multifonction (E) selon les revendications 1, 2, 3, 4, 5, 6, où il comprend également au moins une mémoire fiscale avec un contenu immuable, et le logement correspondant à l'intérieur d'un boîtier intégré qui n'est pas accessible de l'extérieur du dispositif, ladite mémoire fiscale étant fixée de manière amovible à l'intérieur dudit boîtier, et où ledit boîtier ne peut être ouvert qu'après avoir cassé le sceau fiscal.

8. Ordinateur de poche électronique multifonction (E) selon les revendications 1, 2, 3, 4, 5, 6, 7, où il comprend également au moins un détecteur de faux billets
